# EUROPEAN PATENT APPLICATION

(11) **EP 1 330 002 A1**
(43) Date of publication of application: **23.07.2003**
(21) Application number: 03075153.1
(22) Date of filing: 17.01.2003
(51) Int. Cl.: H02G 3/12

(54) **Flush junction box**

(30) Priority: 18.01.2002 NL 1019776
(71) Applicant: ABB B.V., 6716 AA Ede (NL)
(72) Inventor: Nieuwhart, Johannes A.M., 5432 DT Cuijk (NL)
(74) Representative: De Hoop, Eric

(57) **Abstract**

Flush junction box provided with metallic detection means. The metallic detection means form a substantially contiguous detection surface. In an advantageous manner the detection means have been connected to the lid of the flush junction box. Preferably the detection means are formed by an insertion piece. In yet another preferred embodiment the detection means are formed by a snapped on or screwed on part.

## Description

The invention relates to the field of flush junction boxes for electric (domestic) installations.

After placing the flush junction box and after laying lines in the wall, the flush junction box is subsequently provided with a lid covered by a stucco layer when the wall is stuccoed. When at a later moment in time the fitter wants to use the flush junction box, he must try to find back the flush junction box in the wall. This may for instance be done by tapping on the wall and listening where the flush junction box is situated. The drawback of this is that the sound of the stuccoed solid wall is difficult to distinguish from the sound of the stuccoed wall at the location of the flush junction box. Another drawback is that tapping the wall at several places is very laborious and time-consuming. Moreover the wall may get damaged when tapping on the stuccoed wall.

It is an object of the invention to improve on this.

To that end the invention provides a flush junction box provided with metallic detection means, which metallic detection means form a substantially contiguous detection surface. By using metallic detection means the box is easy to find back with a metal detector, for instance a line detector (which is often used in installation operations). When moving the detector along the wall for instance a sound or light signal is given at the location of the metallic detection means. Because the detection means form a substantially contiguous detection surface, the position of the flush junction box (preferably the centre of the flush junction box) can easily be established: as opposed to a non-contiguous detection surface where the separate detection spots have to be detected in order to establish the position of the flush junction box, detecting once will now suffice. One signal of the detector directly indicates the position of the flush junction box.

Flush junction boxes also include cast junction boxes: this regards flush junction boxes which are attached to the shuttering when casting concrete in order to thus be incorporated in a concrete wall.

It is noted that flush junction boxes are usually provided with little metal screws for attachment of switching appliances to the flush junction box. However, a metal detector of increased sensibility has to be used for detecting said little screws. Moreover, once one little screw has been detected, the other little screw still has to be detected in order to establish the position of the flush junction box. This is time-consuming, also because the position of the little screw detected first has to be remembered when searching for the second little screw. Moreover, said method is not such that the position of a little screw can be established with great accuracy. The invention improves on this.

Preferably the detection surface formed extends substantially parallel to the bottom of the flush junction box. In practice the detection surface will then also extend parallel to the wall surface, which improves the detection.

Preferably the detection means are situated near the access opening of the flush junction box, and thus close to the wall surface, because of which the detection is further improved.

Preferably the detection means are connected to the lid of the flush junction box, for instance in the form of a metal foil which is adhered to the lid like a sticker. This is advantageous because on the one hand the lid, in the built-in position of the flush junction box, is situated relatively close to the stucco layer and because on the other hand a large surface area of the detection means is possible. As a result detection is made easier. Moreover, the detection means are easy to connect to the lid due to the shape and the nature of the lid. Another advantage is that the detection means, in order to directly indicate the centre of the flush junction box, can easily be arranged at the location of the centre of the flush junction box. In principle the lid can be removed and placed again.

In and advantageous manner the detection means are formed by an insertion piece. An injection moulding process for the flush junction box and the lid can then relatively simply be realised such that the insertion piece is injection moulded integrally in the process, or can later on be inserted (and re-used) in the flush junction box or the lid.

In a preferred embodiment the detection means are formed by a part that has been snapped on or screwed on, to the flush junction box or to the lid. Snapping on or screwing on has the advantage that the connection can be realised in a simple way and that re-use of the detection means is possible.

When manufacturing the flush junction box and/or the lid, the detection means may comprise metal particles that have been integrally injection moulded. The manufacturing process for the flush junction box, the lid and the detection means remains relatively simple whereas the number of parts (constituting the flush junction box, the lid and the detection means) remain minimal.

The detection means may comprise vacuum evaporated metal particles, metallic paint or metal chips. Then as well the number of parts remains minimal.

In another embodiment the detection means comprise a wire or ring in the flush junction box or in the lid. By positioning the middle of the wire and the centre of the ring at the location of the centre of the flush junction box the centre of the flush junction box can quickly be established by looking for the middle of the wire or following the course of the ring with the detector.

Preferably the metal is aluminium.

Detection is further improved when the detection surface has a size of some cm².

The invention furthermore provides a method for detecting a built-in flush junction box, covered by a layer of stucco, by moving a metal detector, for instance a line detector, along the layer of stucco, a signal given by the metal detector indicating the location of the flush junction box, particularly the centre of the flush junction box.

In an advantageous manner the signal for indicating the centre of the flush junction box is a continuous signal. This has the advantage that the detection of the centre of the flush junction box can take place more easily than is the case when the detection means do not form a substantially contiguous surface and in which case therefore the position of the flush junction box has to be established by means of several separate signals.

An embodiment of the invention will be described below by way of example on the basis of the figures.

Figures 1 and 2 show a view of the flush junction box with lid, having a metal foil at the inside of the lid.

Figure 3 shows the flush junction box with lid shown in figure 1, built in in a wall covered by a layer of stucco.

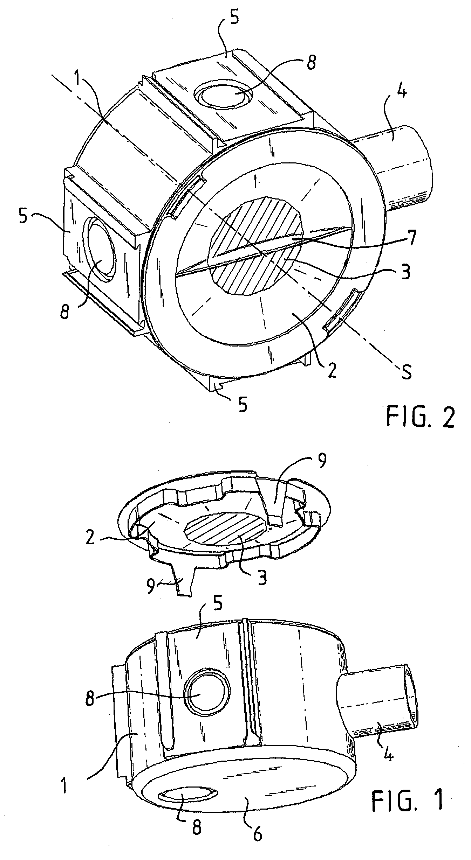

In figure 1 a flush junction box 1 with a lid 2 is shown. The flush junction box 1 is of the usual type having a bottom 6, a passage 4 for connection to installation tubes, coupling planes 5 and break-away gates 8. At the inside of the lid 2 a metal foil sticker 3 of aluminium has been adhered (alternatively a sticker can also be adhered to the outside of the lid 2). The lid 2 has an engagement surface 7 in order to be able to remove the lid 2 from the flush junction box 1 and furthermore it has been provided with little legs 9 for positioning the lid 2 in the flush junction box 1. The metal foil sticker 3 has a circular shape whereby the centre of the metal foil sticker 3 substantially corresponds to the centre S of the flush junction box 1.

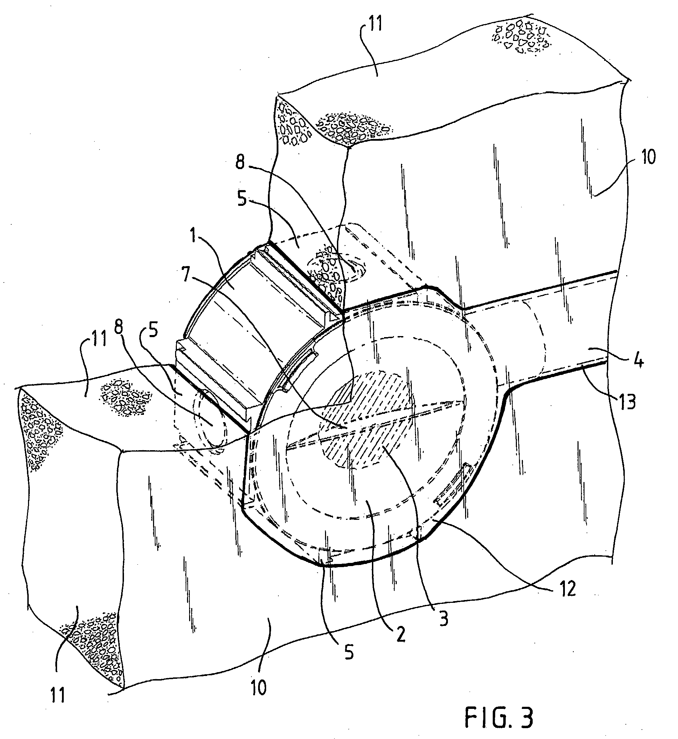

Figure 3 shows the flush junction box 1 with the lid 2 of figure 1, built in in a hole 12 having slit 13 in a wall 11. The entire wall 11 is covered here with a stucco layer 10; the observer cannot possibly see where the flush junction box 1 is positioned in the wall 11. As appears from figure 3 the metal foil sticker 3 is relatively close to the outer surface of the stucco layer 10. By moving a metal detector along the stucco layer 10, a signal will be given when the metal detector moves over the metal foil sticker 3. Because the metal foil sticker 3 has been arranged at the location of the centre of the flush junction box 1, the signal given is a direct indication of the centre of the flush junction box 1. The centre of the flush junction box 1 can therefore be quickly and easily detected on the basis of one single, continuous signal. After that the stucco layer 10 which covers the flush junction box 1, can be removed, as far as necessary, in order to gain access to the flush junction box 1. The lid 2 can be smashed in and removed, after which wires can be drawn and switching appliances installed. Damage to the other part of the stucco layer 10 and/or the wall 11 is thus prevented.

## Claims

1. Flush junction box provided with metallic detection means, which metallic detection means form a substantially contiguous detection surface.

2. Flush junction box according to claim 1, the detection surface formed substantially extending parallel to the bottom of the flush junction box.

3. Flush junction box according to claim 1 or 2, the detection means being centred with respect to the flush junction box.

4. Flush junction box according to claim 1, 2 or 3, the detection means being connected to the lid of the flush junction box.

5. Flush junction box according to any one of the claims 1-4, the detection means being formed by an insertion piece.

6. Flush junction box according to any one of the claims 1-4, the detection means being formed by a part that has been snapped on or screwed on.

7. Flush junction box according to any one of the claims 1-4, the detection means comprising metal particles, such as aluminium particles, integrally injection moulded during the manufacturing of the flush junction box and/or the lid.

8. Flush junction box according to any one of the claims 1-6, the detection means comprising vacuum evaporated metal particles.

9. Flush junction box according to any one of the claims 1-6, the detection means comprising metallic paint.

10. Flush junction box according to any one of the claims 1-6, the detection means comprising metal chips.

11. Flush junction box according to any one of the claims 1-6, the detection means comprising a metal foil.

12. Flush junction box according to any one of the claims 1-6, the detection means comprising a wire or ring, preferably of metal, such as aluminium.

13. Flush junction box according to any one of the claims 7-12, the metal used being aluminium.

14. Flush junction box according to claim 11 when depending from claim 4, the metal foil being adhered to the lid like a sticker.

15. Flush junction box according to any one of the preceding claims, the detection surface having a size of some cm².

16. Flush junction box according to any one of the preceding claims, the detection means being situated near the access opening of the flush junction box.

17. Method for detecting a built-in flush junction box according to any one of the preceding claims, covered by a layer of stucco, **characterized by** moving a metal detector, for instance a line detector, along the layer of stucco, a signal, preferably a continuous signal, given by the metal detector indicating the location of the flush junction box, particularly the centre of the flush junction box.
